# EUROPÄISCHE PATENTSCHRIFT

(11) **EP 1 361 525 B1**
(45) Veröffentlichungstag und Bekanntmachung des Hinweises auf die Patenterteilung: **03.10.2007**
(21) Anmeldenummer: 02024711.0
(22) Anmeldetag: 06.11.2002
(51) Int. Cl.: G06F 11/34

(54) **Vergleich von Verarbeitungsprotokollen**
Comparison of processing protocols
Comparaison des protocoles de traitement

(30) Priorität: 06.05.2002 DE 10220204
(43) Veröffentlichungstag der Anmeldung: 12.11.2003
(73) Patentinhaber: Software Engineering GmbH, 40470 Düsseldorf (DE)
(72) Erfinder: Neumann, Ralf, 46539 Dinslaken (DE)
(74) Vertreter: Cohausz & Florack

(56) Entgegenhaltungen:
- US-B1- 6 240 409
- CHENG J M ET AL: "IBM DATABASE 2 PERFORMANCE: DESIGN, IMPLEMENTATION, AND TUNING" IBM SYSTEMS JOURNAL, IBM CORP. ARMONK, NEW YORK, US, Bd. 23, Nr. 2, 1984, Seiten 189-210, XP000748539 ISSN: 0018-8670
- "IBM DB2 Buffer Pool Tool" IBM CORPORATION, [Online] 1999, XP002266985 Gefunden im Internet: <URL:http://www-306.ibm.com/software/data/ db2/os390/v6facts/db2bpt.html> [gefunden am 2004-01-13]
- D. JOHANN, R. NEUMANN: "Application Performance tuning for DB2 OS/390 and z/OS Finding relevant Candidates" GMBH WHITE PAPERS, 2002, XP002260972
- "Tuning PeopleSoft Applications for the DB2 for OS/390 Environment" MARTIN HUBEL CONSULTING, 1999, XP002266987

## Beschreibung

Die Erfindung betrifft ein Verfahren zum automatischen Vergleichen mindestens zweier Verarbeitungsprotokolle, bei dem in einem ersten Verarbeitungsprotokoll von mindestens einem ersten Programm in einer Datenbank ausgelöste Aktionen protokolliert werden, und bei dem in einem zweiten Verarbeitungsprotokoll von mindestens einem zweiten Programm in der Datenbank ausgelöste Aktionen protokolliert werden. ,

Des Weiteren betrifft die Erfindung ein Computerprogrammprodukt zur Durchführung eines Vergleichs zweier Verarbeitungsprotokolle, durch das ein erstes Verarbeitungsprotokoll von durch mindestens ein erstes Programm in einer Datenbank ausgelöste Aktionen erstellt wird, und durch das ein zweites Verarbeitungsprotokoll von durch mindestens ein zweites Programm in einer Datenbank ausgelöste Aktionen erstellt wird.

Die Erfindung betrifft ebenfalls eine Vorrichtung zum automatischen Vergleichen zumindest zweier Verarbeitungsprotokolle mit einer Protokolliereinrichtung zum Erfassen eines ersten und eines zweiten Verarbeitungsprotokolls, mit mindestens einer Zugriffseinrichtung zum Zugreifen auf Daten innerhalb einer Datenbank, und mit einer Erfassungseinrichtung zum Erfassen von durch auf der Zugriffseinrichtung ausgeführten ersten oder zweiten Programmen ausgelöste Aktivitäten in der Datenbank, wobei die erfassten Aktivitäten an die Protokolliereinrichtung übermittelbar sind und in der Protokolliereinrichtung den jeweiligen Verarbeitungsprotokollen zugeordnet werden.

Schließlich betrifft die Erfindung auch eine Verwendung eines solchen Verfahrens, eines solchen Computerprogrammprodukts oder einer solchen Vorrichtung.

Zugriffe auf Datenbanken, insbesondere relationale Datenbanken wie DB2 von IBM, werden durch externe Programme oder Programmgruppen ausgelöst. Erfindungsgemäß werden unter der Bezeichnung Programme sowohl Programmgruppen als auch einzelne Programme verstanden. Eine Programmgruppe kann aus vielen Elementen (Packages) bestehen. Jedes Element kann Datenbankaktivitäten auslösen. Solche Aktivitäten können Abfragen, Veränderungen, Löschungen oder weitere sein. Beispielsweise werden bei einer Abfrage in der Datenbank gespeicherte Daten anhand bestimmbarer Parameter abgerufen. Um Datenbankaktivitäten auszulösen, werden standardisierte Schnittstellen eingesetzt. Eine solche ist die Structured Query Language (SQL) Schnittstelle. Solche Datenbankaktivitäten oder Abfragen heißen SQL-Statements.

Bei einer Abfrage mit Hilfe eines SQL-Statements werden in der Datenbank Aktionen ausgelöst. Durch diese Aktionen werden gespeicherte Daten verarbeitet, wodurch eine Beantwortung von Datenbankabfragen ermöglicht wird. In Abhängigkeit der jeweiligen Datenbankabfrage als auch in Abhängigkeit von einer Reihenfolge mehrerer Datenbankabfragen können sich die Antwortzeiten für ein und dieselbe Abfrage oder Folge von Abfragen voneinander unterscheiden. Dies ist dann von Interesse, wenn Programme oder Programmversionen miteinander verglichen werden sollen.

Der Artikel "IBM Database 2 performance : Design, implementation, and tuning", IBM systems Journal, Nr 2, Seite 189-210 offenbart die Erstellung eines Berichts über der Durchführung eines bestimmten Programms, der insbesondere die Anzahl von Seitenaufrufen an einer Datenbank und die Anzahl von verschiedenen SQL-Datenbankabfragen ergibt.

Programme werden im Lauf der Zeit verändert. Veränderte Programmversionen können zu unterschiedlichen Ergebnissen bezüglich der Leistung einer Datenbank führen. Dies kann zum einen daran liegen, dass sich die Abfragen der Programme zueinander verändert haben. Auch ist es möglich, dass sich Aufgrund veränderter Datenstrukturen innerhalb der Datenbank die Antwortzeiten auf eine Abfrage verändern. In einem solchen Fall werden eventuell veränderte Zugriffspfade benötigt, die zu einer veränderten Leistung der Datenbank führen. Ebenso ist es möglich, dass aufgrund einer veränderten Anzahl oder Art von Datensätze die Tabellen, in denen die Datensätze gespeichert sind, ihre Größe ändern. Diese drei Faktoren können unter anderem die Leistungsfähigkeit einer Datenbank, insbesondere deren Antwortzeiten auf Abfragen, bestimmen.

Die Hardware-Ausstattung, auf der eine Datenbank arbeitet, kann sich ebenfalls im Lauf der Zeit verändern. Eine verbesserte Hardware-Ausstattung führt dazu, dass Datenbankabfragen unter Umständen schneller abgearbeitet werden können. Dies ist jedoch nicht Ergebnis einer optimierten Datenbankabfrage bzw. einer verbesserten Programmversion, sondern der verbesserten Hardware zuzuschreiben.
Es ist derzeit nicht möglich, unabhängig von der Hardware-Ausstattung eine Aussage darüber treffen zu können, wie sich Veränderungen innerhalb von Programmversionen auf die Leistung einer Datenbankabfrage bzw. einer Vielzahl von Datenbankabfragen auswirken. Es ist durchaus möglich, dass durch eine verbesserte Hardware-Ausstattung eine im Vergleich zu einer Vorversion weniger performante Datenbankabfrage eine bessere Antwortzeit erzielt. Dadurch lassen sich Programme aber nicht mehr in der Weise vergleichen, dass die Datenbankabfragen, welche objektiv die schlechteren Ergebnisse erzielen, gefunden werden.

Der Erfindung liegt daher das technische Problem zugrunde, ein Vergleich von Programmen, Programmgruppen oder Datenbankabfragen, die auf einer Datenbank arbeiten, unabhängig von der Hardware-Ausstattung, zu ermöglichen.

Das technische Problem besitzt bereits eigenständig erfinderischen Charakter. Der Vergleich von Datenbankabfragen in unterschiedlichen Programmversionen, unabhängig von der zugrunde liegenden Hardware-Ausstattung, war bisher nicht bekannt.

Das zuvor hergeleitete technische Problem wird erfindungsgemäß durch ein Verfahren nach Anspruch 1.

Werden Verarbeitungsprotokolle (Performance-Traces) geschrieben, werden die Zugriffe und Aktionen innerhalb einer Datenbank protokolliert. Erfindungsgemäß ist erkannt worden, dass gerade die Seitenaufrufe einer Datenverwaltungsschicht an eine Speicherverwaltungsschicht eine Vergleichsmöglichkeit, unabhängig von der zugrunde liegenden Hardware, schafft. Die Seitenaufrufe werden von der Datenverwaltungsschicht an die Speicherverwaltungsschicht übergeben.

Beispielsweise übermittelt eine Data-Manager-Schicht (Datenverwaltungsschicht) an eine Buffer-Pool-Manager-Schicht (Speicherverwaltungsschicht) eine Anzahl von Getpage-Aufträgen, die von einer einzigen Datenbankabfrage ausgelöst wurden. In einer neuen Programmversion übermittelt die Data-Manager-Schicht an die Buffer-Pool-Manager-Schicht eine andere Anzahl von Getpage-Aufträgen für die dazugehörigen Datenbankabfragen. Das bedeutet, dass sich die Zugriffszeit für die Beantwortung der Datenbankabfragen verändert. Zwar ist es möglich, dass bei einer verbesserten Hardware-Ausstattung eine Mehrzahl von Seitenzugriffen innerhalb einer kürzeren Zeit abgearbeitet werden, dies bedeutet jedoch nicht, dass ein Programm eine höhere Performance zur Verfügung stellt. Eine Performance Steigerung, unabhängig von der Hardware-Ausstattung, lässt sich aber dann feststellen, wenn für gleiche Aufgaben in der Datenbank weniger Seitenaufrufe benötigt werden.

Daher werden erfindungsgemäß die Seitenaufrufe, die mit Hilfe der Verarbeitungsprotokolle protokolliert wurden, miteinander verglichen. Ein erstes Verarbeitungsprotokoll protokolliert beispielsweise die Seitenaufrufe einer ersten Programmversion. Dieses Verarbeitungsprotokoll lässt sich abspeichern. Beispielsweise können in dem Verarbeitungsprotokoll Informationen über die SQL-Texte, deren Herkunft (Plan, Collection, Package, Version), CPU-Zeit, Elapse-Zeit und Getpages innerhalb einer Tabelle, beispielsweise einer DB2-Tabelle, gespeichert werden. Die gleichen Informationen werden auch in einem zweiten Verarbeitungsprotokoll gespeichert, wenn beispielsweise eine neuere Programmversion aufgespielt worden ist. Der Vergleich der Verarbeitungsprotokolle legt die Unterschiede in der Anzahl der Seitenaufrufe dar. Somit kann festgestellt werden, ob sich die Seitenaufrufe zwischen zwei Verarbeitungsprotokollen verändert haben. Liegen Veränderungen innerhalb der Seitenaufrufe vor, könnte sich die Leistung einer Programmversion geändert haben. Dies kann aber auch noch von der Zugriffsstrategie der Datenbank auf die Tabelle, den Tabellengrößen oder auch den Objektgrößen abhängen.

Um eine Aussage unabhängig von äußeren Faktoren treffen zu können, kann beispielsweise eine Ausgabe generiert werden, welche die Seitenaufrufe, z.B. die SQL-Texte, die Zugriffspfade und die Tabellengrößen angibt.

Vorteilhaft ist, wenn Seitenaufrufe und Programme der Programmgruppen einander zugeordnet werden. Dann ist es möglich festzustellen, innerhalb welcher Programme sich die Veränderungen ergeben haben. Dies erleichtert eine nachträgliche Analyse der Programme. Der Programmierer weiß sofort, welches Programm die Veränderung an den Seitenaufrufen verursacht hat. Eine Verbesserung der Leistung lässt sich dann durch Analyse und Veränderung des jeweiligen Programms erreichen.

Es wird zur Vereinfachung der Analyse von Programmversionen vorgeschlagen, dass die Seitenaufrufe Datenbankabfragen der den Programmgruppen zugeordneten Programmen zugeordnet werden. Innerhalb von Programmen werden eine Vielzahl von Datenbankabfragen ausgelöst. Jede Datenbankabfrage verursacht Seitenaufrufe. Durch die Zuordnung der Seitenaufrufe zu den jeweiligen Datenbankabfragen kann dem Programmierer eine noch detailliertere Information darüber gegeben werden, weshalb und wo sich die Veränderungen an den Seitenaufrufen ergeben haben.

Das Zuordnen eines Seitenaufrufes zu einer Programmgruppe, einem Programm oder einer Datenbankabfrage beruht unabhängig vom erfindungsgemäßen Vergleich bereits eigenständig auf einer Erfindung. Durch das Zuordnen der protokollierten Seitenaufrufe zu den Programmen können diese sehr gezielt analysiert werden.

In diesem Zusammenhang ist jedenfalls vorteilhaft, wenn die Seitenaufrufe von einander zuordnenbaren Programmgruppen, Programmen oder Datenbankabfragen miteinander verglichen werden. Innerhalb von zumindest zwei Programmgruppen, die mit Verarbeitungsprotokollen protokolliert werden, beispielsweise zwei unterschiedlichen Programmversionen, entsprechen zumindest einige der enthaltenden Programme bzw. Datenbankabfragen einander. Veränderungen an den Programmgruppen betreffen in der Regel nur einen kleinen Teil der enthaltenen Programme bzw. Datenbankabfragen. Die Datenbankabfragen oder Programme können gemäß der vorteilhaften Ausgestaltung zwischen den beiden protokollierten Programmgruppen einander zugeordnet werden und die von ihnen verursachten Seitenaufrufe verglichen werden. Beim Vergleich der Verarbeitungsprotokolle werden daher die Programme bzw. Datenbankabfragen ermittelt, die einander zuordnenbar sind und anschließend die von ihnen erzeugten Seitenaufrufe miteinander verglichen.

Insbesondere die Anzahl der Seitenaufrufe ist ein Maß dafür, wie leistungsfähig ein Programm ist. Daher wird vorgeschlagen, dass die Anzahl der Seitenaufrufe miteinander verglichen wird. Hat sich die Anzahl der Seitenaufrufe von einem Programm zum nächsten, bzw. von einer Version zur neueren, vergrößert, ist das dazugehörige Programm bzw. die dazugehörige Datenbankabfrage im Vergleich zu ihrer Vorgängerversion eventuell weniger performant. Neben der Anzahl der Seitenaufrufe kann ebenfalls die Tabellengröße sowie der von der Datenbank gewählte Zugriffspfad entscheidend für die Leistung eines Programms sein.

Um die Anzahl der zu vergleichenden Seitenaufrufe und Programme bzw. Datenbankabfragen minimieren zu können, wird vorgeschlagen, dass eine Mindestanzahl von Seitenaufrufen bestimmt wird, ab der ein Vergleich durchgeführt wird. Diese Mindestanzahl ist frei bestimmbar. Erst bei einer bestimmten Anzahl von Seitenaufrufen, die von einem Programm erzeugt werden, wird ein Vergleich durchgeführt. Das bedeutet, dass beispielsweise nur Programme, die mehr als einen Seitenaufruf innerhalb der Datenbank erzeugen, mit ihrem Pendant des anderen Programms, beispielsweise der neueren Version, bezüglich der Seitenaufrufe verglichen werden.

Es ist ebenfalls bevorzugt, dass ein Mittelwert von durch ein Programm, eine Programmgruppe und/oder eine Datenbankabfrage ausgelösten Seitenaufrufen gebildet wird. Der Mittelwert erlaubt eine Auswertung unabhängig von statistischen Ausreißern. Es ist möglich, dass ein Vergleich erst dann durchgeführt wird, wenn der Mittelwert über einer bestimmbaren Mindestanzahl liegt.

Beim Vergleich wird gemäß einer vorteilhaften Ausgestaltung die absolute und/oder prozentuale Abweichung der Seitenaufrufe zwischen einander zuordnenbaren Programmen und/oder Datenbankabfragen ermittelt. Diese Angaben erlauben eine verbesserte Aussage über die Leistungsfähigkeit eines Programms oder einer Datenbankabfrage. Auch können die Mittelwerte miteinander verglichen werden.

Die Ausgabe einander zuordnenbarer Programme und/oder Datenbankabfragen zusammen mit der Anzahl der Abweichungen in den Seitenaufrufen ermöglicht, dass für eine spätere Analyse der Grad der Veränderung sowie die Quelle der Veränderung zwischen zwei Programmversionen genau bestimmt werden kann.
Um nicht jede, auch nur geringfügige Änderung in den Seitenaufrufen analysieren zu müssen, wird vorgeschlagen, dass ein absoluter oder prozentualer Mindestwert für die Anzahl der Abweichungen oder deren Mittelwert, bestimmt wird, ab dem einander zuordnenbare Programme oder Datenbankabfragen, ausgegeben werden. Übersteigt die absolute oder prozentuale Abweichung von Seitenaufrufen den bestimmbaren Mindestwert, werden die dazugehörigen Programme oder Datenbankabfragen ausgegeben. Dies kann zusammen mit der Anzahl der Abweichung in den Seitenaufrufen geschehen. Auch die prozentuale Abweichung kann ausgegeben werden.

Um eine bessere Analyse der jeweiligen Datenbankabfragen oder Programme zu ermöglichen, wird vorgeschlagen, dass die Syntaxen der ausgegebenen Programme und/oder Datenbankabfragen miteinander verglichen werden und dass syntaktische Unterschiede ausgegeben werden. Hierbei können syntaktische Elemente extrahiert und miteinander verglichen werden. Veränderungen in den Zeichenfolgen der Datenbankabfragen oder Programme bleiben dabei unberücksichtigt, lediglich die syntaktischen Elemente können miteinander verglichen werden.

Vorteilhaft ist, wenn das Verarbeitungsprotokoll durch Abfragen einer Standardschnittstelle ermittelt wird. Beispielsweise wird in einer DB2 von IBM eine Protokollierung mit Hilfe des Instrumentation Facility Interfaces (IFI) ermöglicht. Eine Vielzahl von Aktivitäten der Datenbank kann mittels unterschiedlicher Instrumentation Facility IDs (IFC IDs) auf dem Instrumentation Facility Interface (IFI) protokolliert (getraced) werden. Durch geeignete Abfragen bestimmter Instrumentation Facility IDs lässt sich die gewünschte Information gewinnen. Beispielsweise kann über die Instrumentation Facility ID 198 jede Getpage Abfrage von einer Datenverwaltungsschicht an eine Speicherverwaltungsschicht abgefragt werden.

Die Zuordnung der Seitenaufrufe zu den jeweiligen Programmen und/oder Datenbankabfragen wird dadurch erreicht, dass die Abfragen der Standardschnittstelle miteinander kombiniert werden. Beispielsweise lässt sich über eine geeignete Kombination der Instrumentation Facility IDs Getpage, Fetch, Select, Update, Insert, Delete, SQL-Text, Prepare, Open, Close, End jeder Seitenaufruf einer dazugehörigen Datenbankabfrage, Programm (Package) und Programmgruppe zuordnen.

Ein weiterer Gegenstand der Erfindung, mit dessen Hilfe das technische Problem der Erfindung ebenfalls gelöst wird, ist ein Computerprogramm, insbesondere nach einem vorbeschriebenen Verfahren, und ein Computerprogrammprodukt nach Anspruch 12.

Das erfindungsgemäße technische Problem wird ebenfalls gemäß eines weiteren Gegenstands der Erfindung durch eine Vorrichtung, insbesondere mit einem vorbeschriebenen Verfahren oder einem vorbeschriebenen Computerprogrammprodukt, nach Anspruch 13. Mit Hilfe der Erfassungseinrichtung werden die Seitenaufrufe erfasst. Dazu wird beispielsweise eine standardisierte Schnittstelle der Datenbank durch die Erfassungseinrichtung abgefragt. Die erfassten Seitenaufrufe werden protokolliert und in der Vergleichseinrichtung mit einem vorherigen Verarbeitungsprotokoll verglichen. Durch die Vorrichtung ist es beispielsweise möglich, Verarbeitungsprotokolle von unterschiedlichen Programmversionen zu ermitteln. Diese können dann miteinander verglichen werden.

Schließlich ist ein weiterer Gegenstand der Erfindung, der ebenfalls das erfindungsgemäße technische Problem löst, eine Verwendung eines vorbeschriebenen Verfahrens, eines vorbeschriebenen Computerprogrammprodukts oder einer vorbeschriebenen Vorrichtung in einer relationalen Datenbank. Eine solche relationale Datenbank ist beispielsweise eine DB2 von IBM. Diese kann eingesetzt werden, um Verwaltungsprogramme, beispielsweise SAP R/3 oder Versicherungs- und Finanzprogramme, mit Daten zu versorgen. Diese Programme verursachen die Datenbankabfragen und Seitenaufrufe.
Im Nachfolgenden wird die Erfindung anhand einer ein Ausführungsbeispiel zeigenden Zeichnung näher erläutert. In der Zeichnung zeigen:
- Fig. 1: einen schematischen Schichtenaufbau einer Datenbank,
- Fig. 2: den Ablauf eines erfindungsgemäßen Verfahrens und
- Fig. 3: den Aufbau einer erfindungsgemäßen Vorrichtung.

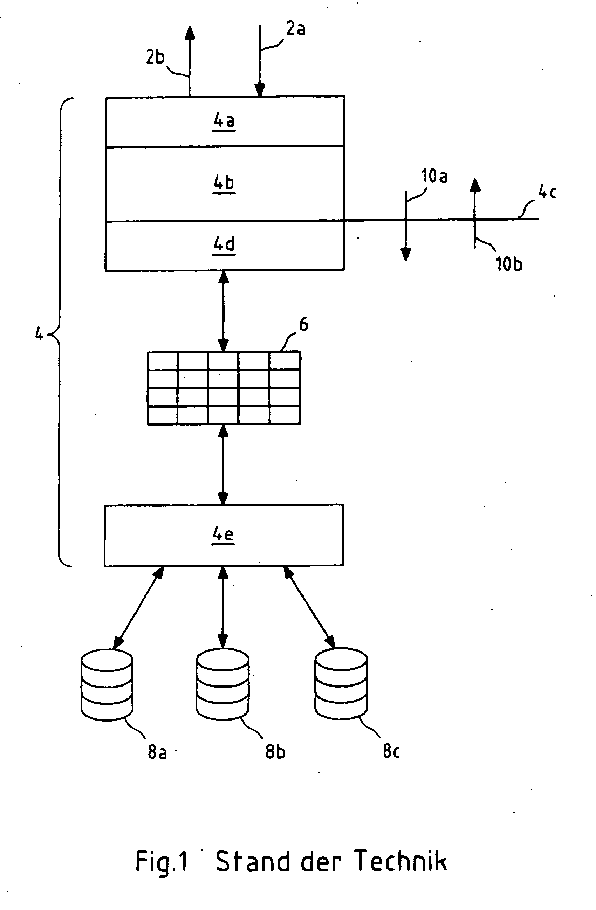

Fig. 1 zeigt den Schichtenaufbau 4 einer herkömmlichen Datenbank, beispielsweise der DB2 von IBM. Schematisch und funktionell ist eine Datenbank unter anderem aus einer Relational-Data-System (RDS)-Schicht 4a, einer Data-Manager-Schicht 4b, einer Buffer-Pool-Manager-Schicht 4d und einer Media Manager Schicht 4e aufgebaut Dieser Schichtaufbau 4 ist ein möglicher Schichtbau, der die Beantwortung von SQL-Abfragen 2 durch die Datenbank ermöglicht.

Die Buffer-Pool-Manager-Schicht 4d greift auf einen virtuellen Buffer Pool 6 zu. Der virtuelle Buffer Pool 6 wird in Form einer Tabelle mit 4K-Blöcken gebildet. Jeder der 4K-Blöcke kann eine Seite der Datenbank enthalten. Blöcke des virtuellen Buffer Pools 6 werden aus den Tabellen 8 über die Media-Manager-Schicht 4e gefüllt. Eine Seitenanfrage von der Buffer-Pool-Manager-Schicht 4d an den virtuellen Buffer Pool 6 wird direkt beantwortet, falls die Seite in einem 4K-Block innerhalb des virtuellen Buffer Pools 6 vorhanden ist. Ist diese Seite nicht innerhalb des virtuellen Buffer Pools 6 vorhanden, wird eine Anfrage an die Media-Manager-Schicht 4e gestellt, die Zugriff auf die Tabellen 8a, b und c hat. Die angeforderte Seite wird aus einer der Tabellen 8a, b oder c geladen und in einem 4K-Block des virtuellen Buffer Pools 6 zur Verfügung gestellt.

Über die Data-Manager-Schicht 4b werden Seitenaufrufe 10a an die Buffer-Pool-Manager-Schicht 4d über die Schnittstelle 4c gestellt. Diese Seitenaufrufe 10a sind lediglich abhängig von der Art und Reihenfolge der SQL-Abfragen 2a. Die Anzahl der Seitenaufrufe 10a ist unabhängig von der Anzahl und Größe des virtuellen Buffer Pools 6 sowie seiner 4K-Blöcke. Ein Seitenaufruf 10a wird durch die Buffer-Pool-Manager-Schicht 4d über die Schnittstelle 4c beantwortet 10b.

Unabhängig davon, ob im virtuellen Buffer Pool 6 oder über die Media-Manager-Schicht 4e eine Seite aufgerufen werden muss, wird ein Seitenaufruf 10a beantwortet. Das bedeutet, dass die Seitenaufrufe 10a an der Schnittstelle 4c unabhängig von der Hardware-Ausstattung einer Datenbank sind.

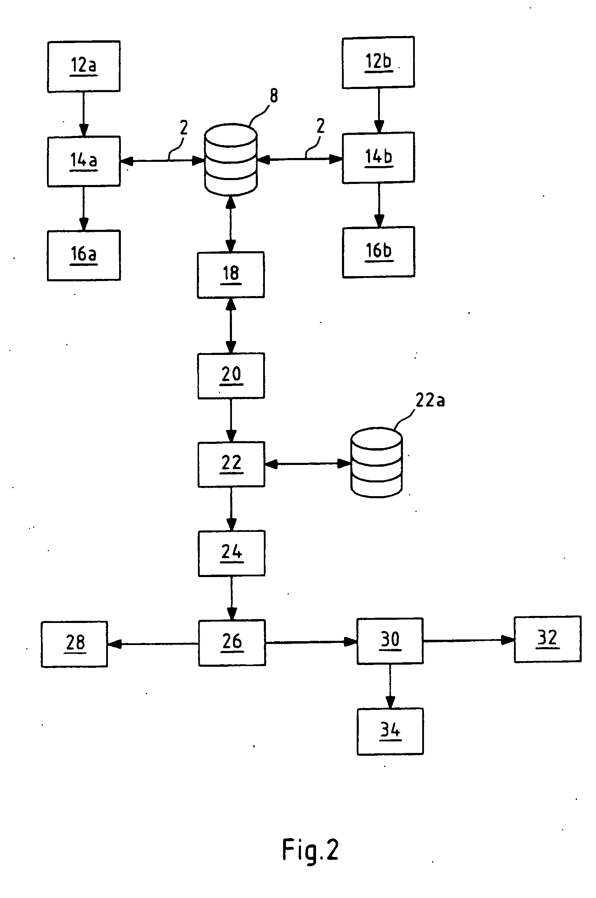

Um nun eine Aussage über die Leistung einzelner Datenbankabfragen, Programme bzw. Programmgruppen oder Versionen von Programmen treffen zu können, wird vorgeschlagen, Performance-Traces der DB2 Performance zu erstellen und diese miteinander zu vergleichen. Hierzu wird ein Verfahren, wie es in Fig. 2 dargestellt ist, vorgeschlagen.
Auf eine Datenbank 8 greifen Programme 12 zu. Diese Programme 12 können zeitlich hintereinander zur Verfügung stehen. Beispielsweise ist ein Programm 12a eine Vorgängerversion von einem Programm 12b. Um nun feststellen zu können, wie sich die Leistung des Programms 12b gegenüber dem Vorgängerprogramm 12a verändert hat, ist ein Vergleich von Performance-Traces hilfreich.

Die Programme 12 greifen über SQL-Abfragen 2 auf die Datenbank 8 im Schritt 14 während ihrer Laufzeit zu. Nachdem alle Programmschritte abgearbeitet worden sind, werden die Programme 12 in Schritt 16 beendet. Während der Zugriffe im Schritt 14 der Programme 12 auf die Datenbank 8 verursachen die SQL-Abfragen 2 Aktionen innerhalb der Datenbank 8. Diese Aktionen können über eine Schnittstelle 18 protokolliert werden.

Eine solche Schnittstelle 18 ist beispielsweise ein Instrumentation Facility Interface (IFI). Verschiedene Aktivitäten lassen sich über Instrumentation Facility IDs (IFC IDs) abfragen. So lassen sich beispielsweise folgende Aktivitäten abfragen: Getpage, Fetch, Select, Update, Insert, Delete, SQL-Text, Prepare, Open, Close, End. Alle diese Aktionen können ausgelöst werden, wenn eine SQL-Abfrage 2 an die Datenbank 8 gestellt wird. Zur Erstellung eines Performance-Traces wird auf die Schnittstelle 18 zugegriffen. Hierbei werden geeignete Instrumentation Facility IDs, die protokolliert werden sollen, ausgewählt. Dies sind beispielsweise die oben genannten Instrumentation Facility IDs. Der Durchlauf der Programme 12 wird protokolliert 20 und der Performance-Trace wird in einer Tabelle 22a geschrieben 22. Hierbei lassen sich beispielsweise Informationen über SQL-Text, Herkunft (Plan, Collection, Package, Version), CPU-Zeit, Elapse Zeit und Getpages speichern. Außerdem können die Zugriffspfade aller SQL-Abfragen über die Schnittstellen 18 ermittelt und in der Tabelle 22a gespeichert 22 werden.

Die gespeicherten Performance-Traces werden im Anschluss miteinander verglichen 24. Dabei werden die Seitenaufrufe den jeweiligen Programmgruppen der Programme 12a und 12b zugeordnet. Es ist auch möglich, dass die Seitenaufrufe Teilen von Programmen (Packages) der Programme 12a oder 12b zugeordnet werden. Ebenfalls ist es möglich, das die Seitenaufrufe einzelnen Datenbankabfragen 2 der Programme 12a oder 12b zugeordnet werden.

Beim Vergleich 24 der Performance-Traces werden die einander zugehörigen Programmgruppen, Programme, Teile von Programmen oder Datenbankabfragen miteinander bezüglich der Anzahl ihrer Seitenaufrufe verglichen. Das bedeutet, dass die jeweiligen Veränderungen an den Programmen bezüglich ihrer erzeugten Seitenaufrufe ermittelt werden.

Im Anschluss werden die jeweils einander zugeordneten Programme ausgegeben und die absolute Anzahl von Seitenaufrufen ermittelt 26. Ist diese absolute Anzahl von Seitenaufrufen kleiner als eine bestimmbare Mindestanzahl, werden die Programmen gekennzeichnet und müssen nicht weiter bei der Analyse betrachtet werden 28. Ist die absolute Anzahl der Seitenaufrufe größer als die bestimmbare Mindestanzahl, wird ein absoluter bzw. ein prozentualer Unterschied an Seitenaufrufen zwischen den einander zugeordneten Programmen ermittelt 30. Ist dieser absolute bzw. prozentuale Unterschied kleiner als eine bestimmbare Mindestgröße, so werden diese Programme ebenfalls markiert 32.

Lediglich wenn der absolute bzw. prozentuale Unterschied an Seitenaufrufen zwischen zwei zu vergleichenden Programmen größer als der bestimmbare Mindestwert ist, werden diese Programme zusammen mit der Anzahl, dem Unterschied und der prozentualen Abweichung von Seitenaufrufen ausgegeben 34. Auch können Zugriffspfade und Tabellengröße ausgegeben werden, um die Leistungsfähigkeit und die Veränderungen auch unter Berücksichtigung von veränderten Rahmenbedingungen der Datenbank beurteilen zu können.

Im Anschluss daran ist es möglich, dass die Programme bezüglich ihrer Syntaxen analysiert werden. Die Syntaxanalyse ermöglicht eine exakte Bestimmung der Veränderungen und erleichtert somit eine Optimierung der Programme.

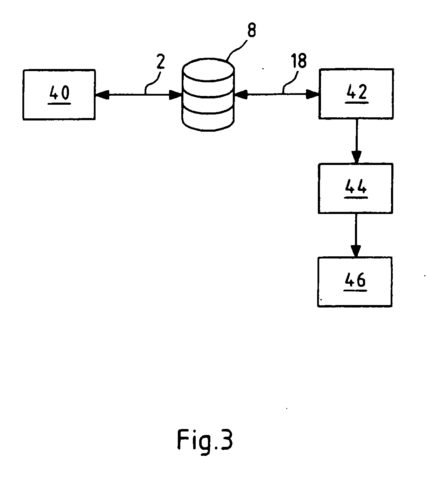

In Fig. 3 ist eine erfindungsgemäße Vorrichtung dargestellt. Eine Zugriffseinrichtung 40 ermöglicht es Programmen, mit Hilfe von SQL-Abfragen 2 auf eine Datenbank 8 zuzugreifen. Auf der Zugriffseinrichtung 40 laufen mit der Zeit sich verändernde Programmversionen. Um diese Programmversionen miteinander vergleichen zu können, wird über die Schnittstelle 18 mit Hilfe einer Erfassungseinrichtung 42 von einer ersten Programmversion und einer zweiten Programmversion eine Vielzahl von Aktionen erfasst. Mit Hilfe der Protokolleinrichtung 44 wird für die erste Programmversion und die zweite Programmversion, die auf der Zugriffseinrichtung 40 laufen, ein Performance-Trace ermittelt, wobei die erfassten Aktionen protokolliert werden.

Diese beiden Performance-Traces werden an die Vergleichseinrichtung 46 übermittelt und dort bezüglich der Seitenaufrufe miteinander verglichen.

## Patentansprüche

1. Verfahren zum automatischen Vergleichen mindestens zweier Verarbeitungsprotokolle,
- bei dem Programme mit Hilfe von Datenbankabfragen Seitenaufrufe verursachen,
- bei dem eine Speicherverwaltungsschicht und eine Datenverwaltungsschicht in einer Datenbank vorgesehen sind,
- bei dem in einem ersten Verarbeitungsprotokoll von mindestens einem ersten Programm in der Datenbank ausgelöste Aktionen protokolliert werden, und
- bei dem in einem zweiten Verarbeitungsprotokoll von mindestens einem zweiten Programm in der Datenbank ausgelöste Aktionen protokolliert werden,
- derart, dass bei der Protokollierung zumindest von der Datenverwaltungsschicht an die Speicherverwaltungsschicht gerichtete Seitenaufrufe protokolliert werden,
- wobei die Seitenaufrufe über die Datenverwaltungsschicht und die Speicherverwaltungsschicht gestellt werden,
**dadurch gekennzeichnet,**
- **dass** die protokollierten Seitenaufrufe automatisch Datenbankabfragen zugeordnet werden,
- **dass** die Datenbankabfragen des ersten Programms den Datenbankabfragen des zweiten Programms zugeordnet werden, und
- **dass** zumindest ein Teil der von den einander zugeordneten Datenbankabfragen in den Verarbeitungsprotokollen protokollierten Seitenaufrufe miteinander verglichen wird.

2. Verfahren nach Anspruch 1, **dadurch gekennzeichnet, dass** Seitenaufrufe und Programme von Programmgruppen einander zugeordnet werden.

3. Verfahren nach einem der Ansprüche 1 bis 2, **dadurch gekennzeichnet, dass** die Anzahl der Seitenaufrufe miteinander verglichen wird.

4. Verfahren nach einem der Ansprüche 1 bis 3, **dadurch gekennzeichnet, dass** eine Mindestanzahl von Seitenaufrufen bestimmt wird, ab der ein Vergleich durchgeführt wird.

5. Verfahren nach einem der Ansprüche 1 bis 4, **dadurch gekennzeichnet, dass** ein Mittelwert von durch ein Programm, eine Programmgruppe oder eine Datenbankabfrage ausgelösten Seitenaufrufen gebildet wird.

6. Verfahren nach einem der Ansprüche 1 bis 5, **dadurch gekennzeichnet, dass** die absolute oder prozentuale Abweichung der Seitenaufrufe zwischen einander zuordnenbaren Programmen oder Datenbankabfragen ermittelt wird.

7. Verfahren nach einem der Ansprüche 1 bis 6, **dadurch gekennzeichnet, dass** einander zuordnenbare Programme oder Datenbankabfragen, zusammen mit der Anzahl der Abweichungen in den Seitenaufrufen, ausgegeben werden.

8. Verfahren nach einem der Ansprüche 1 bis 7, **dadurch gekennzeichnet, dass** ein absoluter oder prozentualer Mindestwert für die Anzahl der Abweichungen bestimmt wird, ab dem einander zuordnenbare Programme oder Datenbankabfragen, zusammen mit der Anzahl der Abweichungen in den Seitenaufrufen, ausgegeben werden.

9. Verfahren nach einem der Ansprüche 1 bis 8, **dadurch gekennzeichnet, dass** die Syntaxen der ausgegebenen Programme oder Datenbankabfragen miteinander verglichen werden und syntaktische Unterschiede in den syntaktischen Elementen ausgegeben werden.

10. Verfahren nach einem der Ansprüche 1 bis 9, **dadurch gekennzeichnet, dass** das Verarbeitungsprotokoll durch Abfragen einer Standardschnittstelle ermittelt wird.

11. Verfahren nach einem der Ansprüche 1 bis 10, **dadurch gekennzeichnet, dass** die Seitenaufrufe aus einer Kombination von Abfragen von mindestens zwei über eine Standardschnittstelle abrufbaren Aktivitäten den Programmen oder Datenbankabfragen zugeordnet werden.

12. Computerprogrammprodukt zur Durchführung eines Vergleichs zweier Verarbeitungsprotokolle, mit einem Verfahren nach einem der Ansprüche 1 bis 11,
- bei dem Programme mit Hilfe von Datenbankabfragen Seitenaufrufe verursachen,
- bei dem eine Speicherverwaltungsschicht und eine Datenverwaltungsschicht in einer Datenbank vorgesehen sind,
- durch das ein erstes Verarbeitungsprotokoll von durch mindestens ein erstes Programm in einer Datenbank ausgelöste Aktionen erstellt wird, und
- durch das ein zweites Verarbeitungsprotokoll von durch mindestens ein zweites Programm in der Datenbank ausgelöste Aktionen erstellt wird,
- derart, dass Seitenaufrufe von der Datenverwaltungsschicht der Datenbank an die Speicherverwaltungsschicht der Datenbank erfasst und protokolliert werden,
- wobei die Seitenaufrufe über die Datenverwaltungsschicht und die Speicherverwaltungsschicht gestellt werden,
**dadurch gekennzeichnet, dass**
- die protokollierten Seitenaufrufe automatisch Datenbankabfragen zugeordnet werden,
- dass die Datenbankabfragen des ersten Programms den Datenbankabfragen des zweiten Programms zugeordnet werden, und
- zumindest ein Teil der von den einander zugeordneten Datenbankabfragen in den Verarbeitungsprotokollen protokollierten Seitenaufrufe miteinander verglichen wird.

13. Vorrichtung zum automatischen Vergleichen zumindest zweier Verarbeitungsprotokolle, insbesondere mit einem Verfahren nach einem der Ansprüche 1 bis 11 oder einem Computerprogrammprodukt nach Anspruch 12,
- mit einer Protokolliereinrichtung zum Erfassen eines ersten und eines zweiten Verarbeitungsprotokolls, wobei jedes Verarbeitungsprotokoll einem Programm zugeordnet ist,
- mit mindestens einer Zugriffseinrichtung zum Zugreifen auf Daten innerhalb einer Datenbank, und
- mit einer Erfassungseinrichtung zum Erfassen von durch auf der Zugriffseinrichtung ausgeführten ersten oder zweiten Programmen ausgelöste Aktionen in der Datenbank,
- wobei die erfassten Aktionen von der Erfassungseinrichtung an die Protokolliereinrichtung übermittelbar sind und in der Protokolliereinrichtung den jeweiligen Verarbeitungsprotokollen zugeordnet werden, und
- wobei die Erfassungseinrichtung zum Erfassen von Seitenaufrufen einer Datenverarbeitungseinrichtung an eine Speicherverwaltungseinrichtung innerhalb der Datenbank vorgesehen ist,
**dadurch gekennzeichnet,**
- **dass** die Protokolliereinrichtung zum Übertragen der Verarbeitungsprotokolle an die Vergleichseinrichtung eingerichtet ist,
- **dass** eine Vergleichseinrichtung zum automatischen Zuordnen der protokollierten Seitenaufrufe zu einer Datenbankabfrage und zum Zuordnen der Datenbankabfragen des ersten Programms zu den Datenbankabfragen des zweiten Programms eingerichtet ist, und
- **dass** die Vergleichseinrichtung zum miteinander Vergleichen zumindest eines Teils der von den einander zugeordneten Datenbankabfrage in den Verarbeitungsprotokollen protokollierten Seitenaufrufe eingerichtet ist.

14. Verwendung eines Verfahrens nach einem der Ansprüche 1 bis 11 oder eines Computerprogrammprodukts nach Anspruch 12 oder einer Vorrichtung nach Anspruch 13 in einer relationalen Datenbank.

## Claims

1. Method for the automatic comparison of at least two different application protocols,
- wherein programs cause page requests with the aid of database queries,
- wherein a memory management layer and a data management layer are provided in a database,
- wherein actions triggered in a database are logged in a first application protocol of at least one first program, and
- wherein actions triggered in the database are logged in a second application protocol of at least one second program,
- in such a way that in the logging at least the page requests sent from the data management layer to the memory management layer are logged,
- wherein the page requests are made via the data management layer and the memory management layer,
- **characterised in that** the logged page requests are automatically assigned to database queries,
- that the database queries from the first program are assigned to the database queries of the second program, and
- that at least one part of the page requests of the database queries assigned to each other logged in the application protocol are compared with each other.

2. Method according to claim 1, **characterised in that** page requests and programs of program groups are assigned to each other.

3. Method according to one of claims 1 to 2, **characterised in that** the number of page requests is compared with each other.

4. Method according to one of claims 1 to3, **characterised in that** a minimum number of page requests is determined, from which a comparison is conducted.

5. Method according to one of claims 1 to 4, **characterised in that** an average value of page requests triggered by a program, a program group or a database query is formed.

6. Method according to one of claims 1 to 5, **characterised in that** the absolute or percentage deviation of the page requests between programs or database queries assignable to each other is determined.

7. Method according to one of claims 1 to 6, **characterised in that** programs or database queries assignable to each other are presented together with the number of deviations in the page requests.

8. Method according to one of claims 1 to 7, **characterised in that** an absolute or percentage minimum value for the number of deviations is determined from which programs or database queries assignable to each other are presented, together with the number of deviations in the page requests.

9. Method according to one of claims 1 to 8, **characterised in that** the syntaxes of the programs or database queries presented are compared to each other and syntactical differences in the syntactical elements are presented.

10. Method according to one of claims 1 to 9, **characterised in that** the application protocol is determined by querying a standard interface.

11. Method according to one of claims 1 to 10, **characterised in that** the page requests from a combination of queries of at least two activities callable via the standard interface are assigned to the programs or database queries.

12. Computer program product for performing a comparison of two application protocols, with a method according to one of claims 1 to 11
- wherein programs cause page requests with the aid of database queries,
- wherein a memory management layer and a data management layer are provided in a database,
- through which a first application protocol of actions triggered in a database by at least a first program is created, and
- through which a second application protocol of actions triggered in a database by at least one second program is created,
- in such a way that page requests from a data management layer of the database to the memory management layer of the database are recorded and logged,
- in which the page requests are made via the data management layer and the memory management layer,
**characterised in that**
- the logged page requests are automatically assigned to database queries,
- that the database queries of the first program are assigned to the database queries of the second program, and
- at least one part of the page requests of the database queries assigned to each other logged in the application protocols are compared with each other.

13. Device for an automatic comparison of at least two application protocols, in particular with a method according to one of claims 1 to 11, or a computer program product according to claim 12,
- with a logging device for recording of a first and a second application protocol, whereby each application protocol is assigned to a program,
- with at least one access device for accessing data within a database,
- with a recording device for recording actions in the database triggered by first or second programs executed on the access device,
- wherein the recorded actions are transmittable to the logging device and can be assigned to the respective application protocols in the logging device, and
- wherein the recording device is provided for recording page requests made by a data processing device to a memory management device within the database,
**characterised in**
- **that** the logging device is arranged to transfer the application protocols to the comparison device,
- **that** a comparison device is arranged to assign automatically the logged page requests to a database query and to assign the database queries from the first program to the database queries of the second program, and
- **that** the comparison device is arranged to compare at least one part of the page requests the database queries assigned to each other in logged the application protocols with each other.

14. Use of a method according to one of claims 1 to 11 or of a computer program product according to claim 12 or of a device according to claim 13 in a relational database.

## Revendications

1. Procédé de comparaison automatique d'au moins deux protocoles de traitement,
- dans lequel des programmes déclenchent des appels à l'aide d'interrogations de base de données,
- dans lequel une couche de gestion de mémoire et une couche de gestion de données sont prévues dans une base de données,
- dans lequel un premier protocole de traitement documente les actions déclenchées dans la base de données par au moins un premier programme et
- dans lequel un deuxième protocole de traitement documente les actions déclenchées dans la base de données par au moins un deuxième programme,
- de telle sorte que lors de l'établissement des protocoles, les appels envoyés au moins par la couche de gestion des données à la couche de gestion de la mémoire sont documentés,
- les appels étant établis par l'intermédiaire de la couche de gestion des données et de la couche de gestion de la mémoire,
**caractérisé en ce que**
- les appels documentés sont associés automatiquement à des interrogations de la base de données,
- les interrogations de la base de données par le premier programme sont associées aux interrogations de la base de données par le deuxième programme et
- au moins certains des appels documentés dans les protocoles de traitement par les interrogations mutuellement associées de la base de données sont comparés les uns aux autres.

2. Procédé selon la revendication 1, **caractérisé en ce que** les appels et les programmes de groupes de programmes sont associés les uns aux autres.

3. Procédé selon l'une des revendications 1 à 2, **caractérisé en ce que** les différents appels sont comparés les uns aux autres.

4. Procédé selon l'une des revendications 1 à 3, **caractérisé en ce qu'**il détermine le nombre minimum d'appels sur lesquels une comparaison est réalisée.

5. Procédé selon l'une des revendications 1 à 4, **caractérisé en ce qu'**il forme la valeur moyenne des appels déclenchés par un programme, un groupe de programmes ou une interrogation de la base de données.

6. Procédé selon l'une des revendications 1 à 5, **caractérisé en ce qu'**il détermine l'écart absolu ou en pourcentage entre les appels de programmes ou les interrogations de la base de données qui peuvent être associés les uns aux autres.

7. Procédé selon l'une des revendications 1 à 6, **caractérisé en ce qu'**il délivre les programmes ou les interrogations de base de données qui peuvent être associés les uns aux autres en même temps que le nombre des différences entre les appels.

8. Procédé selon l'une des revendications 1 à 7, **caractérisé en ce qu'**il détermine la valeur minimale absolue ou en pourcentage du nombre des écarts, suite à quoi les programmes ou les interrogations de base de données qui peuvent être associés les uns aux autres sont délivrés en même temps que le nombre des écarts entre les appels.

9. Procédé selon l'une des revendications 1 à 8, **caractérisé en ce qu'**il compare les uns aux autres les syntaxes des programmes ou interrogations de la base de données délivrés et **en ce qu'**il délivre les différences syntaxiques entre les éléments syntaxiques.

10. Procédé selon l'une des revendications 1 à 9, **caractérisé en ce que** le protocole de traitement est déterminé par interrogation d'une interface standard.

11. Procédé selon l'une des revendications 1 à 10, **caractérisé en ce qu'**il associe aux programmes ou aux interrogations de la base de données les appels qui proviennent d'une combinaison d'interrogations d'au moins deux activités qui peuvent être appelées par l'intermédiaire d'une interface standard.

12. Produit de programme informatique en vue de la mise en oeuvre d'une comparaison entre deux protocoles de traitement par un procédé selon l'une des revendications 1 à 11,
- dans lequel des programmes déclenchent des appels à l'aide d'interrogations de la base de données,
- dans lequel une couche de gestion de mémoire et une couche de gestion de données sont prévues dans une base de données,
- par lequel un premier protocole de traitement est établi pour des actions déclenchées par au moins un premier programme dans une base de données et
- par lequel un deuxième protocole de traitement est établi pour des actions déclenchées dans une base de données par au moins un deuxième programme,
- de telle sorte que les appels sont détectés par la couche de gestion de données de la base de données dans la couche de gestion de mémoire de la base de données et sont documentés,
- les appels étant établis par l'intermédiaire de la couche de gestion de données et de la couche de gestion de mémoire,
**caractérisé en ce que**
- les appels documentés sont associés automatiquement à des interrogations de la base de données,
- **en ce que** les interrogations de la base de données du premier programme sont associées aux interrogations de la base de données du deuxième programme et
- **en ce qu'**au moins certains des appels des interrogations mutuellement associées de la base de données et documentés dans les protocoles de traitement sont comparés.

13. Dispositif de comparaison automatique d'au moins deux protocoles de traitement, en particulier par un procédé selon l'une des revendications 1 à 11 ou un produit de programme informatique selon la revendication 12,
- lequel dispositif présente au moins un dispositif d'établissement de protocole qui détecte un premier et un deuxième protocole de traitement, chaque protocole de traitement étant associé à un programme,
- au moins un dispositif d'accès qui permet l'accès aux données contenues dans une banque de données et
- un dispositif de détection qui détecte les actions déclenchées dans la base de données par le premier ou le deuxième programme exécuté sur le dispositif d'accès,
- les actions détectées par le dispositif de détection pouvant être transmises au dispositif d'établissement des protocoles et étant associées dans le dispositif d'établissement de protocoles aux différents protocoles de traitement et
- le dispositif de détection étant prévu pour détecter les appels d'un dispositif de traitement de données à un dispositif de gestion de mémoire à l'intérieur de la base de données,
**caractérisé en ce que**
- le dispositif d'établissement de protocole est conçu pour transférer les protocoles de traitement au dispositif de comparaison,
- un dispositif de comparaison associe automatiquement les appels documentés à une interrogation de base de données et associe les interrogations de base de données par le premier programme aux interrogations de base de données par le deuxième programme et
- le dispositif de comparaison compare l'un à l'autre au moins certains des appels documentés dans les protocoles de traitement, par les interrogations mutuellement associées de la base de données.

14. Utilisation d'un procédé selon l'une des revendications 1 à 11, d'un produit de programme informatique selon la revendication 12 ou d'un dispositif selon la revendication 13 dans une base de données relationnelle.
